# EUROPEAN PATENT SPECIFICATION

(11) **EP 0 378 242 B1**
(45) Date of publication and mention of the grant of the patent: **05.04.1995**
(21) Application number: 90100664.3
(22) Date of filing: 13.01.1990
(51) Int. Cl.: G06F 11/00

(54) **Integrated circuit with a debug environment**
Integrierte Schaltung mit einer Austestumgebung
Circuit intégré comportant un environnement de mise au point

(30) Priority: 13.01.1989 JP 4783/89
(43) Date of publication of application: 18.07.1990
(73) Proprietor: NIPPON CHEMI-CON CORPORATION, Ome-shi Tokyo (JP)
(72) Inventor: Kunioka, Yasuhiro, Higashi-Ome, Ome-shi, Tokyo (JP)
(74) Representative: Patentanwälte Dipl.-Ing. R. Splanemann Dr. B. Reitzner Dipl.-Ing. K. Baronetzky

(56) References cited:
- EP-A- 0 251 481
- US-A- 4 527 234
- WESCON CONFERENCE RECORD, vol. 32, November 1988, pages 1-4, North Hollywood,CA, US; C. MELEAR: "M88000 development tools"
- IEEE MICRO, vol. 5, no. 6, December 1985, pages 4-22, IEEE, New York, US; K.A.EL-AYAT et al.: "The intel 80386-architecture and implementation"
- IBM TECHNICAL DISCLOSURE BULLETIN, vol. 28, no. 7, December 1985, pages 3078-3079, New York, US; "Microcode debug tool implementation"

## Description

This invention relates to an integrated circuit with a debug environment, and particularly to the integrated circuit being capable of easily debugging a software and suitable for a built-in program for the integrated circuit such as an ASIC (Application Specific Integrated Circuit) in which a microcomputer is built.

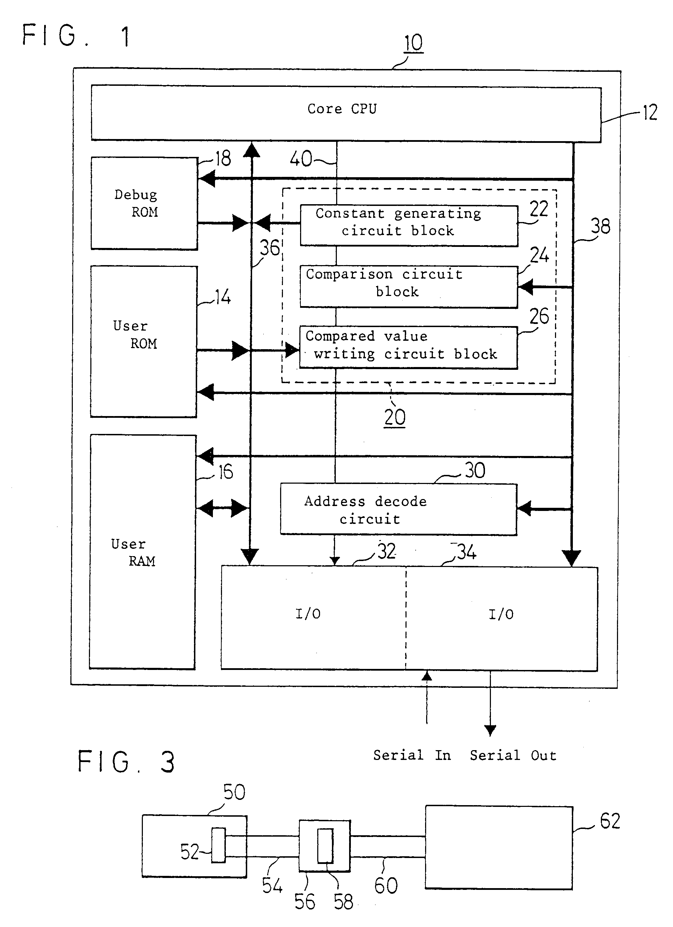

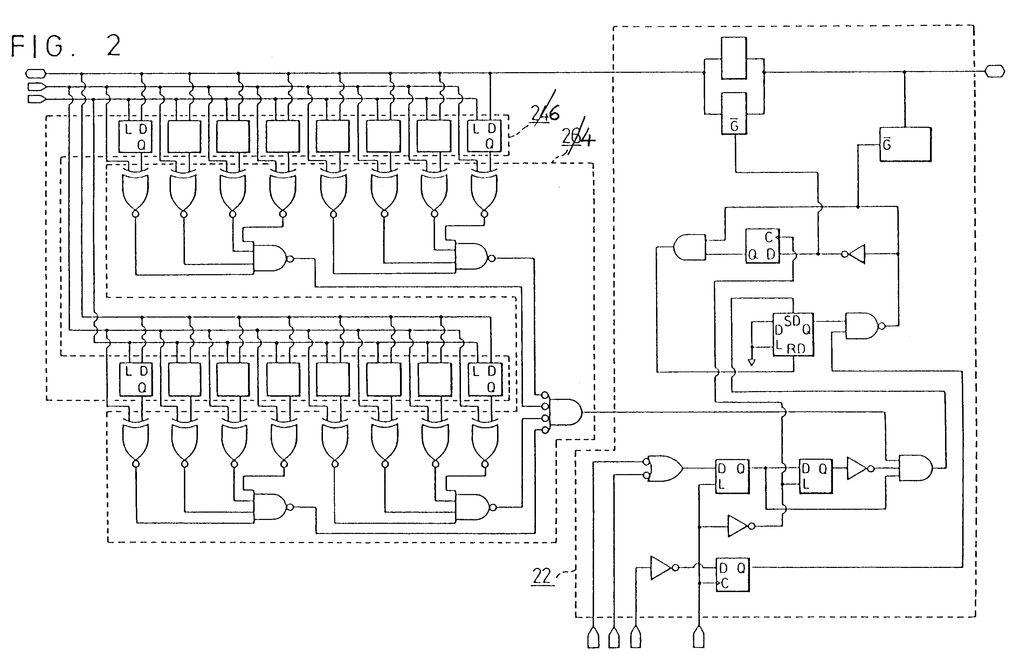

Conventionally, a built-in software for a product in which a microcomputer is contained has been debugged by using an in-circuit emulator (hereinafter referred to as an "ICE") which can simulate the microcomputer's operation. This type of the ICE has a structure shown in Fig. 3. In Fig. 3, a socket 52 for a microcomputer LSI provided on a target machine 50 of the microcomputer-containing product is connected via a cable 54 to a probe 56 comprising a microcomputer chip 58. The probe 56 is connected to a body 62 of the ICE.

In the ICE having such a structure, the probe 56 on which the same type of the microcomputer chip 58 as that used for the target machine 50 is mounted, acts as an interface for connecting the target machine 50 with the ICE body 62 so that the ICE body 62 operates in the same manner as placed on the socket 52. Accordingly, a system containing hardware and software can be debugged by performing an emulation of the target machine 50 and an execution/analysis of a partial command.

However, in the ICE mentioned above, a length of the cable 54, namely a distance between the target machine 50 and the probe 56 gives influences on a signal delay, a load capacity, a noise margin, etc. Therefore, when designing the target machine 50, it is required to determine a design margin after duly taking account of the connection between the target machine and the ICE. If under an actual operating condition the design margin on an installation site exceeds that estimated for the connection with the ICE on a development site, the ICE may in some cases be rendered unusable for an actual machine debug operation due to influence of a noise. As an operating frequency of the microcomputer is increased, it becomes more difficult to use the ICE in an actual machine debug environment under the influence of the noise. In addition, as a size of the target machine 50 is rendered larger, a great amount of labor is required to develop software rather than design hardware upon the development thereof. Accordingly, the ICE serves more importantly as a debug tool of the software and becomes indispensable to the development of the software. Particularly, in case a microcomputer-containing ASIC (hereinafter referred to as a "microcomputer ASIC") for a specific user is used in the target machine 50, it is required to develop a dedicated ICE for the specific user which is used for the microcomputer ASIC. However, the development of the dedicated ICE for the specific user imposes, upon the user, the great development cost which is almost the same as that of the microcomputer ASIC. For this reason, conventionally it becomes difficult to provide each dedicated ICE upon the development of the microcomputer ASIC.

It is an object of the present invention to provide an integrated circuit with a debug environment having the same system debug function as that of an ICE without estimating an excess margin for connection between a target machine and the ICE upon design of a system, being capable of executing an emulation by an external host computer and being economically suitable to a microcomputer ASIC for a specific user.

In accordance with the present invention as claimed in claim 1, there is provided an integrated circuit system in which a debug program executable by comprehending the content of a command instructed from a host computer is stored and also a fixed program forming a basic software debug is stored, said system being characterized in that said fixed program is stored in an exclusive program debug area separate from a user ROM area, said system further forming an integrated circuit comprising a break circuit for breaking, when said debug function is to be performed, execution of a user program and an I/O port for communicating with a host computer, said integrated circuit system being integrated within a microprocessor ASIC chip for specific use which is in the form of one chip having a microprocessor as a core and a combination of various functions of a user ROM, a RAM and a peripheral LSI, wherein a system debug for a program stored in said user ROM and said RAM of the ASIC can be executed, said debug ROM receiving respective instructions transferred via the I/O part from said host computer for execution and the executed results being fed back to said host computer when debugging said microcomputer application specific integrated circuit.

In the integrated circuit with the debug environment according to the present invention, a part of the software for the program debug which is stored in the debug ROM, is the minimum program for processing a part depending upon hardware structure of the microprocessor to be used as a core, such as a read/write of data stored in a memory, an execution of a command, a reference/change of a register, etc., and also a processing program of the lowest level which is commonly appliable to a function to be an object of the processing by the debug software on the host computer. For example, the processing program includes those which can read an address data via the I/O port for communicating with the host computer and transfer the data output to the I/O port. The host computer creates a memory dump (listing of memory contents) command in combination of these functions of the processing program. Thus, a program stored in the ROM and the RAM of the ASIC can easily be debugged from the external host computer.

Claim 1 is delimited against the teaching of document Wescon Conference record, Vol. 32, November 1988, pages 1-4, North Hollywood, CA, US, C. MELEAR : "M88000 DEVELOPMENT TOOLS".

Preferred embodiments of the present invention will be described hereinafter in detail with reference to the accompanying drawings in which:
Fig. 1 is a block diagram of an important part of an integrated circuit with a debug environment according to one embodiment of the present invention;
Fig. 2 is a concrete break circuit diagram according to one embodiment of the present invention; and
Fig. 3 is a structure diagram of a conventional in-circuit emulator.

Referring now to Fig. 1 a microcomputer ASIC chip 10 comprises a core CPU 12, a user ROM 14 containing a program for a specific use, a RAM 16, a RAM 18 containing a remote debugger primitive program (hereinafter referred to as a "monitor program"), an additional break circuit 20 for a debug, an address decode circuit 30, an I/O port 32 for transmitting input/output data to the microcomputer ASIC, a communication I/O port 34 for a debug, a data bus 36 for interconnecting with these components, an address bus 38, a timing control line 40 and the like. The additional break circuit 20 for debug comprises three blocks of a constant generating circuit block 22 which is a program execution break circuit block, a comparison circuit block 24 and a compared value writing circuit block 26 for a preparation of the program execution break.

The respective circuit blocks included in the additional break circuit 20 for a debug operate as follows.

The comparison circuit block 24 comprising EX-NOR gate - and NAND gate - always compares a value stored in the flip-flop with a value transmitted via the address bus 38 from the core CPU 12. The core CPU 12 places an address on the address bus 38 in the below two cases:
(1) a data access to a memory (read and write); and
(2) a command fetch (read a subsequent command from the memory). If in whichever case the address values compared with each other are equal, the comparison circuit block 24 generates a trigger signal to the constant generating circuit block 22.

The constant generating circuit block 22 comprises the constant generating circuit and a bus arbitration circuit which respectively include flip-flops, AND gates, NOR gates, inverters, etc. The constant generating circuit generates a predetermined (fixed) constant, i.e. a command code for causing the core CPU 12 to execute a software interrupt, which is unique to each type of the core CPU 12 to be used. The bus arbitration circuit judges the trigger signal transferred from the comparison circuit block 24 and a command fetch signal transferred from the core CPU 12. Further, the bus arbitration circuit synchronizes a data generated from the constant generating circuit to a bus cycle of the core CPU 12 and places the synchronized data on the data bus 36 connected to the core CPU 12. Since the command fetch signal and the bus cycle of the core CPU 12 respectively depend upon the CPU to be used, a different type of the bus arbitration circuit is employed for each CPU.

The compared value writing circuit block 26 comprising a plurality of flip-flop arrays is entered the data to be transmitted via the data bus 36 by a writing operation of the core CPU 12. Since the writing operation of the core CPU 12 depends upon each type of the CPU to be used in the microcomputer ASIC, generally an "I/O access signal", a "memory access signal", a "write signal", etc. are varied by allowing the core CPU 12 to execute an "I/O command" or a "memory write command". Accordingly, the data to be transmitted via the data bus 36 can be entered to the comparison circuit block by using these signal lines.

A processing sequence will be described hereinafter in case that a target machine on which the microcomputer ASIC chip 10 comprising the above-mentioned circuit blocks is mounted is connected to a host computer so as to debug a user program in the microcomputer ASIC chip 10.

### (1) Start:

On the host side, in order to initialize the microcomputer ASIC chip 10, a character "R" (reset token) is transferred via a communication line to the microcomputer ASIC chip 10. The microcomputer ASIC chip 10 is waiting for an entry of the token via the communication line under control of a monitor program stored in the debug ROM 18 of the microcomputer ASIC chip 10. When receiving the token from the host side, the microcomputer ASIC chip 10 analyzes the token, the reset token in this case, executes such an initialization of a monitor as the initialization of data stored in a register save area for controlling the monitor program and such an initialization of a circuit as a reset of the comparison circuit 24, and then waits for a reentry of the token via the communication line.

### (2) Setting of a break address:

When a user enters a command for setting the break address by a keyboard of the host computer, a debugger program on the host side analyzes the command and transfers a character "B" (break token) and a break address data via the communication line to the microcomputer ASIC chip 10.

The microcomputer ASIC chip 10 analyzes the token, the break token in this case, sets the break address data on the comparison circuit 24 and then waits for a reentry of the token via the communication line.

### (3) Execution of a user program and occurrence of the break:

When the user enters a command for executing the user program stored in the user ROM 14 and the user RAM 16 by the keyboard of the host computer, the debugger program on the host side analyzes the command, transfers a character "G" (go token) and an execution start address data via the communication line to the microcomputer ASIC chip 10 and then waits for an entry of a break occurrence token from the microcomputer ASIC chip 10.

The microcomputer ASIC chip 10 analyzes the token, the go token in this case, being transferred from the host side, returns the data stored in the register save area to the respective registers and then jumps to the specified address, thereby the user program is executed.

When the user program is executed to proceed to a break address, the comparison circuit 24 operates so as to cause a software interrupt and the monitor program has control again. The monitor program informs the host side of occurrence of a break by generating the token to the host side and waits for a reentry of the token via the communication line from the host computer.

Repeat of the processing sequence described on the above (2) and (3) effects emulation for the user program of the microcomputer ASIC chip 10 on the host computer side, resulting in execution of a system debug.

Only about 4% of the area of the 8-bit CPU chip is required to additionally build the small-sized monitor program in the microcomputer ASIC even though the debug ROM for storing the monitor program is built in the microcomputer ASIC chip 10.

Although the monitor program is required to be manufactured according to each type of the core CPU 12 for the target machine, an amount of labor to be taken upon manufacture of the monitor program is not larger than that upon development of a conventional dedicated ICE because of the small size thereof. Once the debugger host program on the host computer side, which is describable in high level language, is prepared, it provides convenient portability to other computers and flexibility for use in various types of the host computer so that there is no necessity to use only a dedicated host computer.

As is obvious from the aforementioned embodiments, according to the invention, the remote primitive debugger program which can debug the user program in the microcomputer ASIC while communicating with the external host computer, is stored in the debug ROM provided on the microcomputer ASIC chip. Further, the remote primitive debugger program can be extremely small since it is prepared so as to allow the debugger host program on the host computer side to execute almost debug supports. For this reason, the debug ROM provided on the microcomputer ASIC also becomes small in size. In addition, the same emulation function as that of a conventional ICE is provided so that a direct debug operation can easily be performed on the microcomputer ASIC of the actual target machine by the external host computer such as a personal computer, etc. Thus, it can be expected to develop a debug program in high efficiency.

Therefore, the present invention can execute the system debug with a considerable economical effect without particularly developing an expensive dedicated ICE for the microcomputer ASIC. Further, a connection margin with the ICE upon development of the microcomputer ASIC cannot be required to be conventionally estimated.

## Claims

1. An integrated circuit system with a debug function comprising a debug ROM (18) in which a debug program executable by comprehending the content of a command instructed from a host computer is stored and also a fixed program forming a basic software for program debug is stored, characterized in that said fixed program is stored in an exclusive program debug area separate from a user ROM (14) area, said system forming an integrated circuit further comprising a break circuit (20) for breaking, when said debug function is to be performed, execution of a user program and an I/O port (32, 34) for communication with a host computer, said integrated circuit system being integrated within a microcomputer application specific integrated circuit chip for specific use which is in the form of one chip having a microprocessor as a core (12) and a combination of various functions of a user ROM (14), a RAM (16) and a peripheral large scale integrated circuit, wherein a system debug for a program stored in said user ROM (14) and said RAM (16) of the application specific integrated circuit can be executed, said debug ROM (18) receiving respective instructions transferred via the I/O port from said host computer for execution and the executed results being fed back to said host computer when debugging said microcomputer application specific integrated circuit.

2. An integrated circuit system according to claim 1, wherein said part of software stored in said debug ROM is a miminum program for processing a part of the software, depending upon hardware structure of said microprocessor to be used as a core.

3. An integrated circuit system according to claim 1 or 2, wherein said break circuit comprises a program execution break circuit block (22), a comparison circuit block (24) and a compared value writing circuit block (26) for breaking the program execution thereby that said comparison circuit block (24) operates so as to cause a software interrupt.

4. An integrated circuit system according to one of the preceding claims wherein said I/O port for communicating with said host computer is prepared to receive a token for a reset and for starting a monitor program in said debug ROM (18) in said integrated circuit system.

## Patentansprüche

1. Integriertes Schaltkreissystem mit einer Debug- oder Fehlerbeseitigungsfunktion, die ein Fehlerbeseitungs-ROM (18) aufweist, in dem ein Fehlerbeseitigungsprogramm, das durch das Verstehen des Inhalts eines Befehls, der von einem Hostcomputer gegeben wird, ausgeführt werden kann, und auch ein festes Programm gespeichert ist, das eine Basissoftware für die Fehlerbeseitigung im Programm bildet, dadurch **gekenn****zeichnet**, daß das feste Programm in einem ausschließlichem Bereich für die Fehlerbeseitigung im Programm gespeichert ist, der von einem Bereich für das Anwender-ROM (14) getrennt ist, wobei das System, das eine integrierte Schaltung bildet, weiterhin eine Unterbrechungsschaltung (20) zur Unterbrechung der Ausführung eines Anwenderprogramms, wenn die Fehlerbeseitigungsfunktion ausgeführt werden soll, und einen E/A-Port (32, 34) für die Kommunikation mit einem Hostcomputer aufweist, wobei das integrierte Schaltkreissystem in einen anwendungsspezifischen Microcomputer-IC-Chip für spezielle Anwendung integriert ist, der in Form eines Chips mit einem Microprozessor als Kern (12) und einer Kombination aus verschiedenen Funktionen eines Anwender-ROMs (14), eines RAMs (16) und eines Peripherie-LSI-Kreises vorliegt, und daß eine Fehlerbeseitigung im System für ein Programm, das im Anwender-ROM (14) und im RAM (16) der anwenderspezifischen integrierten Schaltung gespeichert ist, ausgeführt werden kann, wobei das Fehlerbeseitigungs-ROM (18) die jeweiligen Befehle für die Ausführung empfängt, die vom Hostcomputer über den E/A-Port übertragen werden, und die ausgeführten Ergebnisse zum Hostcomputer zurückgeführt werden, wenn das anwenderspezifische Microcomputer-IC ausgeprüft wird.

2. Integriertes Schaltkreissystem nach Anspruch 1, dadurch gekennzeichnet, daß der Teil der Software, der im Fehlerbeseitigungs-ROM gespeichert ist, ein Mindestprogramm zur Verarbeitung eines Teils der Software ist, abhängig von der Hardwarestruktur des Microprozessors, der als ein Kern verwendet werden soll.

3. Integriertes Schaltkreissystem nach Anspruch 1 oder 2, dadurch gekennzeichnet, daß die Unterbrechungschaltung einen Unterbrechungschaltungs-Block (22) für die Programmausführung, einen Vergleichsschaltungs-Block (24) und einen Schreibschaltungs-Block (26) für Vergleichswerte aufweist, um die Programmausführung dadurch zu unterbrechen, daß der Vergleichsschaltungs-Block (24) so arbeitet, daß er einen Software-Interrupt verursacht.

4. Integriertes Schaltkreissystem nach einem der vorhergehenden Ansprüche, dadurch gekennzeichnet, daß der E/A-Port für die Kommunikation mit dem Hostcomputer bereit ist, eine Berechtigungsmarke für eine Rückstellung und zum Starten eines Monitorprogramms in dem Fehlerbeseitigungs-ROM (18) in dem integrierten Schaltkreissystem aufzunehmen.

## Revendications

1. Système de circuit intégré doté d'une fonction comprenant une ROM de débogage (mémoire morte) (18) dans laquelle sont enregistrés un programme de débogage exécutable en interprétant le contenu d'une commande émise par un ordinateur hôte, ainsi qu'un programme fixe constituant une base logicielle pour le débogage de programmes, caractérisé en ce que ledit programme fixe est sauvegardé dans une zone de débogage exclusive distincte de la zone ROM utilisateur (14), ledit système constituant un circuit intégré comprenant lui-même un circuit de coupure (20) destiné à, quand ladite fonction de débogage doit être exécutée, interrompre l'exécution d'un programme utilisateur et d'un port d'E/S (32, 34) de communication avec un ordinateur hôte, ledit système de circuit intégré étant intégré à une puce de circuit intégré spécifique à une application, de micro-ordinateur pour utilisation spécifique, et se présentant sous la forme d'une puce dotée d'un microprocesseur faisant office de noyau (12) et d'une combinaison de différentes fonctions d'une ROM utilisateur (14), d'une RAM (mémoire vive) (16) et d'un circuit périphérique intégré à grande échelle, dans lequel un système de débogage destiné à un programme enregistré dans ladite ROM utilisateur (14) et ladite RAM (16) du circuit intégré spécifique à application peut être exécuté, ladite ROM de débogage (18) recevant les instructions respectives transférées par le port d'E/S depuis ledit ordinateur hôte pour l'exécution, les résultats de l'exécution étant retransmis à l'ordinateur hôte lors du débogage du circuit intégré spécifique de l'application du micro-ordinateur.

2. Système de circuit intégré selon la revendication 1 dans lequel ladite partie de logiciel sauvegardée dans ladite ROM de débogage est un programme minimal destiné à traiter une partie du logiciel en fonction de la structure matérielle dudit microprocesseur devant être utilisé en tant que noyau.

3. Système de circuit intégré selon la revendication 1 ou 2 dans lequel ledit circuit de coupure comprend un bloc de circuit d'interruption d'exécution de programme (22), un bloc de circuit de comparaison (24) et un bloc de circuit d'écriture de valeur comparée (26) destinés à interrompre l'exécution du programme, de sorte que ledit bloc de circuit de comparaison (24) opère de manière à provoquer une interruption logicielle.

4. Système de circuit intégré selon l'une quelconque des revendications précédentes dans lequel ledit port d'E/S destiné à communiquer avec ledit ordinateur hôte est préparé à recevoir un jeton pour une réinitialisation et pour le démarrage d'un programme moniteur de surveillance dans ladite ROM de débogage (18) à l'intérieur dudit système de circuit intégré.
